# EUROPÄISCHE PATENTSCHRIFT

(11) **EP 0 681 781 B1**
(45) Veröffentlichungstag und Bekanntmachung des Hinweises auf die Patenterteilung: **07.07.1999**
(21) Anmeldenummer: 95106487.2
(22) Anmeldetag: 28.04.1995
(51) Int. Cl.: A01B 73/06

(54) **Geräterahmen für landwirtschaftliche Maschinen**
Frame for agricultural machine
Châssis pour machine agricole

(30) Priorität: 04.05.1994 US 237749; 23.06.1994 US 264410
(43) Veröffentlichungstag der Anmeldung: 15.11.1995
(73) Patentinhaber: Deere & Company, Moline, Illinois 61265-8098 (US)
(72) Erfinder: Landphair, Donald Keith, Bettendorf, Iowa 52722 (US); Luxon, Gary Deloy, Moline, Illinois 61265 (US); Riewerts, Paul Reed, Port Byron, Illinois 61275 (US)
(74) Vertreter: Feldmann, Bernhard

(56) Entgegenhaltungen:
- US-A- 4 763 915
- US-A- 4 927 165

## Beschreibung

Die Erfindung bezieht sich auf einen Geräterahmen für landwirtschaftliche Maschinen mit einem Zentralrahmen, der wenigstens zwei Laufräder und wenigstens einen ersten und einen zweiten Hubzylinder zur Vertikalverstellung aufweist, einem rechten und einem linken Flügelrahmen, von denen jeder wenigstens ein Laufrad und wenigstens einen Hubzylinder zur Vertikalverstellung aufweist, mit dem Zentralrahmen zur Verstellung in eine Transportstellung schwenkbar verbunden ist, in der Arbeitsstellung zu dem Zentralrahmen ausgerichtet ist und deren Laufräder in der Transportstellung keine Bodenberührung haben, und mit einem Hydraulikkreis für die Hubzylinder zur Vertikalverstellung.

Derartige Geräterahmen finden bevorzugt bei Sämaschinen oder Geräten für die Bodenbearbeitung oder für die Saat- und Pflanzenpflege Anwendung. Im Einsatz werden sie in der Regel von einem Traktor gezogen. An den Geräterahmen werden die Arbeitswerkzeuge angeschlossen. Da die Arbeitsbreite solcher Geräte immer größer wird, werden solche Geräterahmen immer breiter, so daß ihre Arbeitsbreite für Transportfahrten verkleinert werden muß.

Bei dem Geräterahmen, von dem die Erfindung ausgeht (US-A-4 607 708), werden die beiden seitlich an dem Zentralrahmen angelenkten Flügelrahmen für eine Transportfahrt um vertikale Achsen hydraulisch nach vorne geschwenkt. Der Zentralrahmen selbst ist geteilt ausgebildet und kann um eine horizontale Achse kippen, um im Arbeitseinsatz sich den Bodenunebenheiten anpassen zu können. Beide Teile des Zentralrahmens stützen sich auf jeweils zwei Laufrädern auf dem Boden ab. Entsprechendes gilt für die beiden Flügelrahmen. Jedem der acht Laufräder ist, was allerdings in dem vorgenannten Dokument im einzelnen nicht offenbart ist, jedoch bei von John Deere gebauten derartigen Geräterahmen der Fall ist, ein Hubzylinder zugeordnet, über die der Geräterahmen aus seiner abgesenkten Arbeitsstellung hochfahrbar ist. In der eingeklappten Transportstellung haben nur noch die Laufräder des Zentralrahmens Bodenkontakt und ihre zugehörigen Hubzylinder sind ausgefahren. Wichtig ist es bei derartigen Geräterahmen, daß der Zentralrahmen zusammen mit seinem Flügelrahmen gleichmäßig verstellt wird. Hierzu sind die Hubzylinder eines jeden Flügelrahmens zu den Hubzylindern an dem zugehörigen Zentralrahmenabschnitt in Reihe geschaltet. Damit auch beide Zentralrahmenabschnitte gleichmäßig verstellt werden können, ist den Hubzylindern an dem Zentralrahmen ein Hauptzylinder vorgeschaltet, der als Stromteiler dient.

Derartige Geräterahmen entsprechen den Anforderungen der Praxis vollkommen. Sie können jedoch hinsichtlich ihrer hydraulischen Betätigung noch verbessert werden, weshalb die Erfindung vorsieht, daß der Hydraulikkreis mit einem Ventilsatz zur Phasenumschaltung versehen und der erste oder zweite Hubzylinder des Zentralrahmens als steuernder Zylinder und der zweite oder erste Hubzylinder des Zentralrahmens als gesteuerter Zylinder ausgebildet ist, wobei in einer ersten Stellung des Ventilsatzes der steuernde Zylinder den Hubzylinder des rechten oder linken Flügelrahmens steuert, während der gesteuerte Zylinder mit dem Hubzylinder des linken oder rechten Flügelrahmens verbunden ist und wobei in einer zweiten Stellung des Ventilsatzes die Hubzylinder der Flügelrahmen hydraulisch blockiert sind und der steuernde Zylinder mit dem gesteuerten Zylinder hydraulisch verbunden ist. Auf diese Weise ist zunächst ein Hubzylinder an einem Flügelrahmen zu einem Hubzylinder am Zentralrahmen und der andere Hubzylinder am Zentralrahmen zu dem Hubzylinder an dem anderen Flügelrahmen in Reihe geschaltet. In der Arbeitsstellung beispielsweise werden dadurch die beiden Flügelrahmen und der Zentralrahmen gleichmäßig verstellt, auch dann, wenn irgendein Teilabschnitt des Geräterahmens stärker belastet sein sollte, wie etwa durch das Gewicht des Saatgutes oder gleiches. In einer weiteren Stellung ist dann der in Reihe geschaltete Hubzylinder (gesteuerter Zylinder) am Zentralrahmen zu dem anderen Hubzylinder (steuernder Zylinder) in Reihe schaltbar, so daß auch der Zentralrahmen gleichmäßig verstellbar ist, insbesondere dann, wenn sich die beiden Flügelrahmen in ihrer Transportstellung befinden, die die nach vorne eingeklappte und ausgehobene Stellung der Flügelrahmen sein kann. Ein als Stromteiler dienender Hauptzylinder ist nicht erforderlich. Der Hydraulikkreis zum Heben kann einfacher ausgebildet werden und hat eine bessere Betriebssicherheit. Kostengünstiger ist er ebenfalls.

Damit die Phasenverstellung in einfacher Weise vorgenommen werden kann, wird nach der Erfindung ferner vorgeschlagen, daß der Ventilsatz zur Phasenumschaltung ein erstes und ein zweites Sperrventil aufweist, die jeweils zwischen einer Durchflußstellung und einer Sperrstellung verstellbar sind und in der zweiten Stellung des Ventilsatzes ihre Sperrstellung einnehmen, wobei der Rückfluß aus den Hubzylindern der Flügelrahmen blockiert ist, was vorzugsweise der Fall ist, wenn sich die Hubzylinder der Flügelrahmen in einer Stellung befinden, in der die Flügelrahmen am tiefsten abgesenkt sind oder die entsprechenden Hubzylinder vollkommen eingefahren sind.

Zur einfachen Phasenverstellung sieht die Erfindung außerdem vor, daß der Ventilsatz zur Phasenumschaltung mindestens ein Kreuzungsventil aufweist, das jeweils zwischen einer Durchflußstellung und einer Sperrstellung verstellbar ist, in der zweiten Stellung des Ventilsatzes seine Durchflußstellung einnimmt und in dieser Stellung den steuernden Zylinder des Zentralrahmens mit dessen gesteuerten Zylinder verbindet. Gegebenenfalls sind zwei Kreuzungsventile vorzusehen, die dann baugleich mit den Sperrventilen ausgebildet werden können. Dies ist kostengünstig und vereinfacht die Ersatzteillagerhaltung.

Die Phasenumschaltung könnte theoretisch automatisch erfolgen, jedoch wird nicht zuletzt aus Sicherheitsgründen bevorzugt, daß der Ventilsatz zur Phasenumschaltung manuell schaltbar ist. Der Ventilsatz zur Phasenumschaltung läßt sich leicht auf dem Zentralrahmen anordnen.

Damit über die Hubzylinder in der Arbeitsstellung ein Arbeitsdruck ausübbar ist, sind die Hubzylinder doppelseitig beaufschlagbar. In solchen Fällen bietet es sich für eine einfache Gestaltung des Hydraulikkreises an, daß das kolbenstangenseitige Ende des steuernden Zylinders über eine Leitung mit dem zylinderseitigen Ende des Hubzylinders des rechten oder linken Flügelrahmens verbunden ist, in dessen zu dem kolbenstangenseitigen Ende führender Speise- und Rücklaufleitung eines der Sperrventile vorgesehen ist, daß das zylinderseitige Ende des gesteuerten Zylinders über eine Leitung mit dem kolbenstangenseitigen Ende des Hubzylinders des linken oder rechten Flügelrahmens verbunden ist, wobei in dieser Leitung das zweite Sperrventil vorgesehen ist, und daß beide Verbindungsleitungen über eine Kreuzleitung miteinander verbunden sind, in der mindestens ein Kreuzungsventil vorgesehen ist.

Wenn die Geräterahmen eine äußerst große Arbeitsbreite haben, sollten zusätzliche Laufräder mit entsprechend zugehörigen Hubzylindern vorgesehen sein, weshalb nach der Erfindung für solche Fälle vorgeschlagen wird, daß jeder Flügelrahmen mit einem jeweils einem weiteren Laufrad zugeordneten Hilfszylinder und daß der Zentralrahmen mit zwei weiteren jeweils einem weiteren Laufrad zugeordneten Hilfszylindern versehen ist, wobei in den Speise- und Rücklaufleitungen, die zu den kolbenstangenseitigen Enden der Hilfszylinder führen, eines der beiden Sperrventile vorgesehen ist.

Damit bei einer unsachgemäßen Bedienung oder bei Störungen ein Absenken des Geräterahmens nicht unmöglich ist, sieht die Erfindung schließlich vor, daß die Sperrventile in ihrer Sperrstellung eine Druckbeaufschlagung der kolbenstangenseitigen Enden aller Hubzylinder und Hilfszylinder zulassen. Die Sperrventile können hierzu mit entsprechend wirkenden Rückschlagventilen versehen sein.

In der Zeichnung ist ein nachfolgend näher erläutertes Ausführungsbeispiel der Erfindung dargestellt. Es zeigt:
- Fig. 1: einen nach vorne einklappbaren Geräterahmen mit angeschlossenen Arbeitswerkzeugen in der Draufsicht,
- Fig. 2: einen Hydraulikkreis zur Betätigung des Geräterahmens und
- Fig. 3: einen Ausschnitt von dem Zentralrahmen des Geräterahmens mit einer horizontalen Schwenkachse und Stellmitteln für ein Ventilsatz zur Phasenumschaltung.

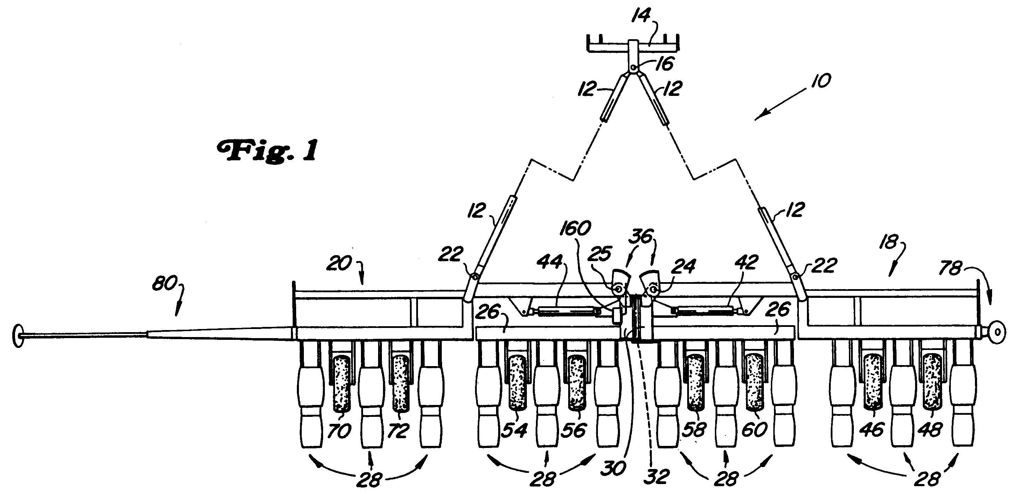

Der in Fig. 1 der Zeichnung dargestellte Geräterahmen 10 ist insbesondere für Transportzwecke nach vorne einklappbar und über sich ebenfalls nach vorne erstreckende Zugrohre 12 an eine Zugstange 14 eines in der Zeichnung nicht dargestellten ziehenden Fahrzeuges über einen vertikalen Kupplungsbolzen 16 anschließbar. Derartige Geräterahmen sind für landwirtschaftliche Sä- und/oder Pflegegeräte konstruiert und erstrecken sich quer zur Fahrt- oder Arbeitsrichtung. Sie nehmen Arbeitswerkzeuge auf, mit denen der Boden bearbeitet oder bestellt werden kann. Ihre Arbeitsbreite ist beträchtlich und kann einiges über 10 m betragen. Bei dem dargestellten Ausführungsbeispiel sind die Zugrohre 12 mit ihren rückwärtigen Enden an jeweils einen rechten und einen linken Flügelrahmen 18 und 20 über vertikale Schwenkzapfen 22 anschließbar. Die Flügelrahmen sind spiegelbildlich ausgebildet und an einen im Arbeitseinsatz zwischen ihnen laufenden Zentralrahmen 26 über je einen das nach vorne Einschlagen ermöglichenden Zapfen 24 und 25 anschließbar. Als Arbeitswerkzeuge dienen beim Ausführungsbeispiel nebeneinander angeordnete Sävorrichtungen 28 für eine Reihenaussaat.

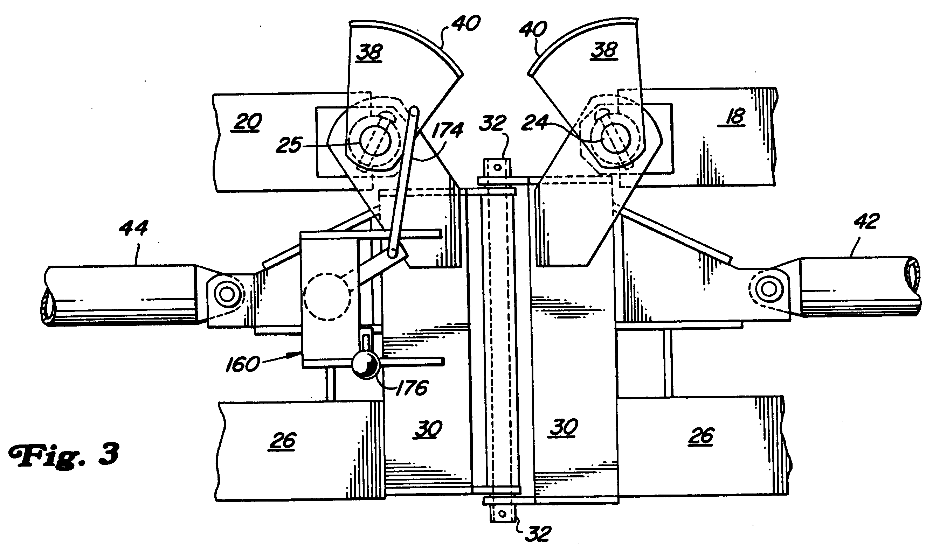

Der Zentralrahmen 26 ist geteilt ausgebildet und im Bereich seiner Mitte mit zwei sich nach vorne oder in Fahrtrichtung erstreckenden Auslegern 30 versehen, die ihrerseits wiederum, was am besten aus Fig. 3 zu ersehen ist, über eine horizontal verlaufende Gelenkachse 32 miteinander verbunden sind. Die frontseitigen Enden der Ausleger 30 nehmen die Zapfen 24 und 25 auf, an denen mit den Flügelrahmen 18 und 20 fest verbundene Seitenausleger angreifen. Ein Paar Sperrnocken 36, auf deren Funktion nachfolgend noch kurz einzugehen ist, ist noch mit den Flügelrahmen 18 und 20 bzw. mit deren Seitenauslegern fest verbunden.

Die horizontal und in Fahrtrichtung verlaufende Gelenkachse 32 dient dazu, daß der rechte Abschnitt des Zentralrahmens 26 mit dem rechten Flügelrahmen 18 gegenüber dem linken Abschnitt des Zentralrahmens 26 mit seinem linken Flügelabschnitt 20 bzw. der linke Abschnitt des Zentralrahmens 26 mit seinem linken Flügelabschnitt 20 gegenüber dem rechten Abschnitt des Zentralrahmens 26 im Arbeitseinsatz Vertikalbewegungen ausführen kann, was bei den großen Arbeitsbreiten und bei einem Auftreffen auf Bodenunebenheiten von Bedeutung ist. Daß der Zentralrahmen 26 geteilt und vertikal verschwenkbar gestaltet ist, ist aber nicht unbedingt zwingend. Die vertikal verlaufenden Zapfen 24 und 25 erlauben ein nach vorne Einklappen der beiden äußeren Flügelrahmen 18 und 20 aus ihrer in Fig. 1 angedeuteten Arbeitsstellung in eine Transportstellung.

Die bereits erwähnten Sperrnocken 36 weisen eine horizontale Platte 38 gegebenenfalls mit einer Öffnung zur Aufnahme des entsprechenden Zapfens 24 bzw. 25 auf. Jedenfalls ist jeder Zapfen 24 bzw. 25 mit der zugehörigen Platte 38 verschweißt. Außerdem trägt jede Platte 38 eine Kontaktleiste 40, die an ihrer Außenkante eine Nockenfläche definiert. Sobald nun der Geräterahmen 10 eingeklappt wird, knicken zunächst die beiden Flügelrahmen 18 und 20 aufeinander zu, da sie noch um die Gelenkachse 32 verstellbar sind. Allerdings kommen bei der Bewegung nach vorne die beiden Sperrnocken 36 in einen gegenseitigen Kontakt und setzen dadurch die Gelenkachse 32 fest und heben die vertikale Schwenkmöglichkeit auf. Dieser Vorgang ist in dem Dokument US-A 4 607 708 (EP-A1-0 158 151) ausführlicher beschrieben, weshalb auf dieses Dokument, in dem auch ein nach vorne einklappbarer Geräterahmen offenbart ist, Bezug genommen wird.

Das nach vorne Einklappen wird hydraulisch ausgeführt, wozu ein rechter und ein linker doppelseitig beaufschlagbarer Zylinder 42 und 44 vorgesehen ist, die nachfolgend als Klappzylinder bezeichnet werden. Jeder Klappzylinder 42, 44 ist zwischen dem entsprechenden nach vorne gerichteten Ausleger 30 und dem zugehörigen rechten oder linken Flügelrahmen 18, 20 angeordnet. Bei einem Ausfahren der Kolbenstangen dieser Klappzylinder 42, 44 werden die beiden Flügelrahmen 18 und 20 nach vorne eingeklappt, bis sie zu einer in Fahrtrichtung verlaufenden Achse ausgerichtet sind. Eine solche Stellung entspricht dann der Transportstellung. Ein Einfahren der Kolbenstangen in die Klappzylinder 42, 44 bewirkt ein Ausschwenken der Flügelrahmen 18, 20 in ihre in Fig. 1 gezeigte Arbeitsstellung. In dieser Stellung verlaufen die Flügelrahmen senkrecht zu der vorgenannten in Fahrtrichtung verlaufenden Achse.

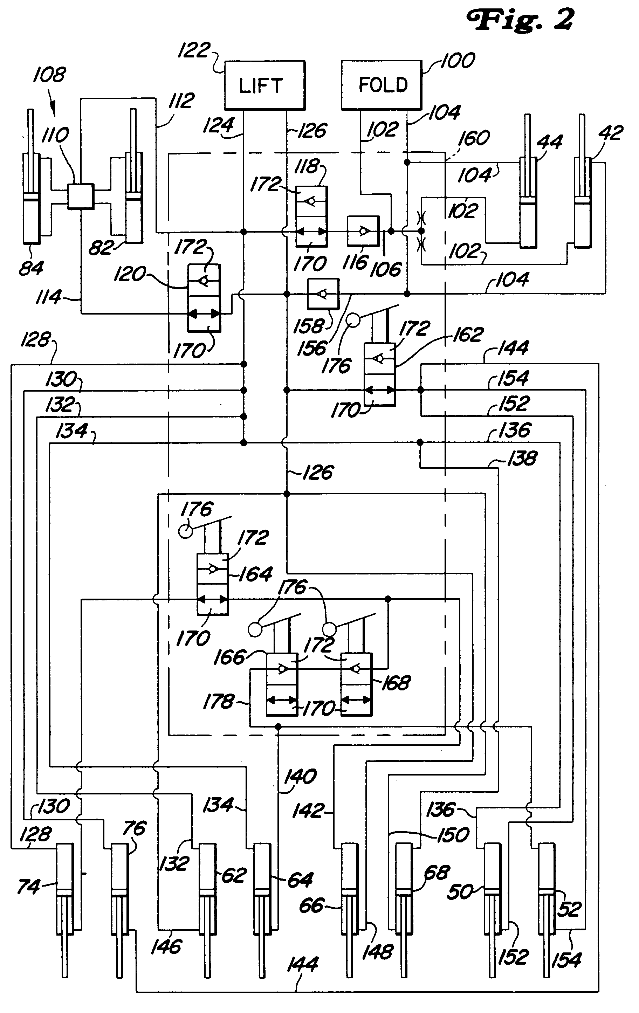

Der rechte Flügelrahmen 18 ist mit Laufrädern 46 und 48 versehen, die über hydraulisch beaufschlagbare Hubzylinder 50 und 52 verstellt werden können. Der Zentralrahmen 26 ist auf Laufrädern 54 und 56, die an seinem linken Abschnitt vorgesehen sind, und auf Laufrädern 58 und 60 angeordnet, die an seinem rechten Abschnitt vorgesehen sind. Die Laufräder 54, 56, 58, 60 am Zentralrahmen 26 sind über Hubzylinder 62, 64, 66, 68 betätigbar. Der linke Flügelrahmen 20 stützt sich auf Laufrädern 70 und 72 ab, die über hydraulisch betätigbare Hubzylinder 74 und 76 anheb- und absenkbar sind. Alle Hubzylinder sind in Fig. 2 dargestellt.

Aus Fig. 1 ist noch erkennbar, daß die Flügelrahmen 18 und 20 mit Spurmarkierern 78 und 80 versehen sind. Der rechte Spurmarkierer befindet sich in seiner hochgestellten Stellung und der linke Spurmarkierer 80 in seiner eine Spur ziehenden Stellung, in der er seitlich ausgeklappt ist. Die Spurmarkierer 78 und 80 werden über in Fig. 2 dargestellte Zylinder 82 und 84, die nachfolgend als Spurmarkierzylinder bezeichnet werden, zwischen ihren beiden Stellungen verstellt.

Fig. 2 zeigt ein Hydraulikschema für die Betätigung aller Zylinder. Man erkennt in Fig. 2 ein schematisch angedeutetes Ventil 100, das als Steuerventil mit drei Stellungen ausgebildet ist, in der Kabine des ziehenden Fahrzeuges angeordnet sein kann und nachfolgend als Klappventil bezeichnet wird. In der Zeichnung trägt es die Bezeichnung "FOLD". Eine als Speise- und Rücklaufleitung dienende erste Leitung 102 und eine als Speise- und Rücklaufleitung dienende zweite Leitung 104 sind an das Klappventil 100 angeschlossen. Wird das Klappventil 100 derart verstellt, daß die erste Leitung 102 als Speiseleitung dient und druckführend ist, dann werden die Kolbenstangen der Klappzylinder 42, 44 ausgefahren, und der Geräterahmen 10 wird in seine Transportstellung verstellt, in der die beiden Flügelrahmen 18 und 20 nach vorne eingeklappt sind. In einer solchen Stellung des Klappventils 100 dient dann die zweite Leitung 104 als Rücklaufleitung und Hydraulikflüssigkeit aus den kolbenstangenseitigen Enden der Klappzylinder 42, 44 strömt in einen nicht dargestellten Sammelbehälter über das Klappventil 100 zurück.

An die erste Leitung 102 ist noch eine Zweigleitung 106 angeschlossen, die zu einem Hydraulikkreis 108 für die Spurmarkierer 78 und 80 führt. Ist die erste Leitung 102 druckführend, dann gelangt unter Druck stehende Hydraulikflüssigkeit zu einem Sequenzventil 110 für die Spurmarkierer über die Zweigleitung 106 und eine als Speise- und Rücklaufleitung dienende erste Leitung 112 für die Spurmarkierer. Dieser Druck aus dem Hydraulikkreis für die Klappzylinder hält die Kolbenstangen der Spurmarkierzylinder 82 und 84 in deren eingefahrenen Stellung und beide Spurmarkierer 78 und 80 in ihrer gefalteten Transportstellung. An das Sequenzventil 110 ist noch eine zweite als Speise- und Rücklaufleitung dienende Leitung 114 für die Spurmarkierer angeschlossen, die zu der zweiten Leitung 104 der Klappzylinder 42, 44 führt. Der Hydraulikkreis 108 und das Sequenzventil 110 sind herkömmlicher Art.

In der Zweigleitung 106 ist noch ein Rückschlagventil 116 derart vorgesehen, daß keine Flüssigkeit von den kolbenstangenseitigen Enden der Spurmarkierzylinder 82, 84 zu den Klappzylindern 42, 44 gelangen kann. Gleichfalls verhindert das Rückschlagventil 116, daß unter Druck stehende Flüssigkeit zu den zylinderseitigen Enden der Klappzylinder 42, 44 aus einem noch zu beschreibenden Kreislauf für die Hubzylinder gelangt. In der Zweigleitung 106 ist ferner noch ein mechanisch verstellbares Riegelventil 118 für die Spurmarkierer mit zwei Stellungen vorgesehen. Ein zweites ebenfalls zwischen zwei Stellungen mechanisch verstellbares Riegelventil 120 für die Spurmarkierer ist in der zweiten als Speise- und Rücklaufleitung dienenden Leitung 114 vorgesehen. Diese Leitung steht mit der zweiten Leitung 104 für die Klappzylinder 42, 44 in Verbindung. Auf den Zweck und die Funktion der Riegelventile wird nachfolgend noch eingegangen.

Der Hydraulikkreis für die Hubzylinder ist mit einem in Fig. 2 schematisch angedeuteten Ventil 122 versehen, das als Steuerventil mit drei Stellungen ausgebildet ist, in der Kabine des ziehenden Fahrzeuges angeordnet sein kann und das nachfolgend als Hubventil bezeichnet ist. In der Zeichnung trägt es die Bezeichnung "LIFT". An das Hubventil 122 ist eine erste und eine zweite als Speise- und Rücklaufleitung dienende Leitung 124 und 126 angeschlossen. Um den Geräterahmen 10 anzuheben, wird die erste Leitung 124 des Hubventils 122 über das Hubventil mit der Druckquelle verbunden, so daß Druckflüssigkeit in sechs als Speise- und Rücklaufleitungen dienende Zweigleitungen 128, 130, 132, 134, 136 und 138 gelangen kann, die an der Leitung 124 angeschlossen sind. Diese Zweigleitungen sind mit den zylinderseitigen Enden der Hubzylinder 74, 76, 62, 64, 50 und 68 verbunden, so daß diese parallel geschaltet und in einem solchen Fall druckbeaufschlagbar sind. Anders verhält es sich mit den Hubzylindern 52 und 66, deren zylinderseitigen Enden nicht an die Zweigleitungen angeschlossen sind.

Der Hubzylinder 64 ist ein steuernder Zylinder und sein kolbenstangenseitiges Ende ist über eine Leitung 140 mit dem zylinderseitigen Ende des Hubzylinders 54 verbunden, der dadurch zu dem Hubzylinder 64 in Reihe geschaltet ist bzw. ein gesteuerter Zylinder ist. In ähnlicher Weise ist der Hubzylinder 74 ein steuernder Zylinder und sein kolbenstangenseitiges Ende ist über eine Leitung 142 mit dem zylinderseitigen Ende des Hubzylinders 66 verbunden, der dadurch zu dem Hubzylinder 74 in Reihe geschaltet ist bzw. ein gesteuerter Zylinder ist.

Die zweite Leitung 126 des Hubventils 122 ist an sechs als Speise- und Rücklaufleitungen dienende Zweigleitungen 144, 146, 148, 150, 152 und 154 angeschlossen, die wiederum mit den kolbenstangenseitigen Enden der Hubzylinder 76, 62, 66, 68, 50 und 52 verbunden sind. Bei einem Anheben des Geräterahmens 10 wird daher die aus diesen Hubzylindern verdrängte Flüssigkeit über die zugehörigen Zweigleitungen in die zweite Leitung 126 des Hubventils 122 und in den Sammelbehälter gelangen.

Während des Arbeitseinsatzes bzw. während des Aussäens wird ein konstanter regulierter nach unten gerichteter Druck automatisch durch das Hubventil 122 kontrolliert. Zur Vergrößerung dieses Druckes wird unter Druck stehende Flüssigkeit in die zweite Leitung 126 geleitet, wodurch das auf die Laufräder wirkende Rahmengewicht zumindest teilweise auf die Arbeitswerkzeuge oder die Pflanz- oder Sävorrichtungen 28 übertragen wird. Außerdem werden die kolbenstangenseitigen Enden der Klappzylinder 42 und 44 immer dann druckbeaufschlagt, wenn die zweite Leitung 126 des Hubventils 122 druckführend ist. Hierzu ist an die zweite Leitung 126 des Hubventils 122 eine Zweigleitung 156 angeschlossen, die wiederum mit der zweiten Leitung 104 des Klappventils 100 in Verbindung steht und ein Rückschlagventil 158 derart aufweist, daß in einem solchen Fall Druckflüssigkeit aus der zweiten Leitung 126 des Hubventils 122 zu den kolbenstangenseitigen Enden der Klappzylinder 42, 44 gelangen kann, aber nicht umgekehrt. Damit werden die Kolben der Klappzylinder immer in einem einfahrenden Sinne druckbeaufschlagt, wenn die kolbenstangenseitigen Enden der Hubzylinder 50, 52, 62, 66, 68 und 70 durch die zweite Leitung 126 des Hubventils 122 druckbeaufschlagt werden (wobei wegen der Reihenschaltung natürlich auch die Hubzylinder 64 und 74 entsprechend beaufschlagt werden), so daß die Flügelrahmen 18, 20 bei dieser Konstellation immer in ihrer in Fig. 1 gezeigten Arbeitsstellung verbleiben. Eine mechanische Verriegelung der Flügelrahmen in der Arbeitsstellung erübrigt sich damit.

Wie aus Fig. 2 außerdem noch erkennbar ist, ist die zweite Leitung 114 des Sequenzventils 110 auch noch an die zweite Leitung 126 des Hubventils 122 angeschlossen, so daß je nach Stellung des Sequenzventils 110 ein zylinderseitiges Ende der Spurmarkierzylinder 82 oder 84 druckbeaufschlagbar ist, wenn die zweite Leitung 126 des Hubventils 122 druckführend ist, so daß der zugehörige Spurmarkierer ausgeklappt und/oder in seiner Spur ziehenden Stellung gehalten wird.

An dem linken sich nach vorne in Fahrtrichtung erstreckenden Ausleger 30 des Geräterahmens 10 ist, wie aus den Fig. 1 und 3 ersichtlich ist, ein Ventilpaket 160 angebaut. Zu diesem Paket gehören die bereits erwähnten Rastventile 118 und 120 sowie manuell betätigbare Ventile 162, 164, 166 und 168 sowie die beiden Rückschlagventile 116 und 158.

Die Rastventile 118 und 120 für die Spurmarkierer 78 und 80 sind als Ventile mit zwei Stellungen ausgebildet. Die erste Stellung 170 ist eine Durchflußstellung und erlaubt einen freien Durchfluß durch das Ventil. Die Rastventile werden in diese Stellung verstellt, wenn der Geräterahmen in seine in Fig. 1 gezeigte Arbeitsstellung verstellt wird. In Fig. 2 sind die Rastventile 118 und 120 in ihrer Durchflußstellung eingezeichnet. Die zweite Stellung 172 ist eine Sperrstellung in Form eines Rückschlagventils. In dieser Stellung wird ein Flüssigkeitsdurchfluß in die erste Leitung 112 des Hydraulikkreises 108 für die Spurmarkierer von dem Hydraulikkreis für die Klappzylinder und ein Flüssigkeitsdurchfluß in die zweite Leitung 114 des Hydraulikkreises 108 von der zweiten Leitung 126 des Hubventils 122 verhindert. Wenn sich die Rastventile 118 und 120 in ihrer zweiten Stellung 172 befinden, können die Spurmarkierer nicht ausgeklappt werden, da Flüssigkeit nicht mehr aus dem Hydraulikkreis 108 für die Spurmarkierer austreten kann.

Die Rastventile 118 und 120 werden über eine Stange 174 verstellt, die an den linken Sperrnocken 36 angeschlossen ist. Wird nun der Geräterahmen 10 eingeklappt oder ausgeklappt, dann bewegt sich der Sperrnocken 36 relativ zu dem Zentralrahmen 26 und verschiebt die Stange 174 und damit werden auch die Rastventile 118 und 120 verstellt. Bei einem Einklappen des Geräterahmens in seine Transportstellung verstellt die Stange 174 die Rastventile 118 und 120 in ihre zweite Stellung 172 d.h. in die Sperrstellung. Wird dagegen der Geräterahmen aus seiner Transportstellung wieder in seine ausgeklappte Arbeitsstellung verstellt, dann verstellen sich die Rastventile 118 und 120 wieder in ihre erste Stellung 170 d.h. in ihre Durchflußstellung. Dadurch, daß die Rastventile 118 und 120 automatisch in ihre Sperrstellung 172 verstellt werden, wenn der Geräterahmen 10 eingeklappt wird, können die Spurmarkierer nicht vorzeitig oder unbeabsichtigt ausgeklappt werden, wenn sich der Geräterahmen 10 in seiner Transportstellung befindet.

Die hydraulischen Hubzylinder 50, 62, 68 und 76 sind Hilfszylinder, die Verwendung finden, um die Hublast auf dem Geräterahmen auszubreiten. Die hydraulischen Hubzylinder 64 und 74 sind kontrollierende Zylinder, die die Arbeitsweise der kontrollierten Zylinder 52 und 66 steuern. Der steuernde Zylinder 64 ist einer der Zylinder, der zum Anheben des Zentralrahmens 26 des Geräterahmens dient, wohingegen der von ihm gesteuerte Zylinder 52 einer der Zylinder ist, die den rechten Flügelrahmen 18 anheben. Durch diese Schaltung der Zylinder ist sichergestellt, daß der rechte Flügelrahmen 18 und der Zentralrahmen 26 in einem ausgeglichenen Zustand zusammen angehoben und abgesenkt werden. In ähnlicher Weise ist der steuernde Zylinder 74 einer der Zylinder, die den linken Flügelrahmen 20 anheben, wohingegen der gesteuerte Zylinder 66 einer der Zylinder ist, die den Zentralrahmen 26 anheben. Diese Schaltung stellt sicher, daß der linke Flügelrahmen 20 und der Zentralrahmen 26 in einem ausgeglichenen Zustand zusammen angehoben und abgesenkt werden. Im ganzen gesehen wird durch das Vorhandensein von steuernden und gesteuerten Zylindern an den beiden Flügelrahmen 18 und 20 und an dem Zentralrahmen 26 der gesamte Geräterahmen 10 in einem ausgeglichenen Zustand angehoben und abgesenkt.

Für die Vorbereitung des Geräterahmens 10 für eine Transportfahrt, wird der Geräterahmen 10 zunächst durch entsprechende Beaufschlagung der Hubzylinder 50, 52, 62, 64, 66, 68, 74 und 76 ausgehoben. Danach wird der Geräterahmen eingeklappt, so daß seine Flügelrahmen 18 und 20 entlang einer in Fahrtrichtung verlaufenden oder Längsachse des ziehenden Fahrzeuges zu liegen kommen. Danach wird der Geräterahmen wieder abgesenkt und die Bedienungsperson steigt von dem ziehenden Fahrzeug ab. Die Bedienungsperson verriegelt sodann die Flügelrahmen 18 und 20 miteinander und verstellt einen zu dem Ventilpaket 160 gehörigen Hebel 176, wodurch bis auf die Rastventile 118 und 120 die übrigen verstellbaren Ventile im Ventilpaket 160, die als Phasenumschaltventile ausgebildet sind, verstellt werden. Zu den Phasenumschaltventilen gehören ein Paar Ventile 162 und 164, die als Sperrventile ausgebildet sind, und ein Paar Ventile 166 und 168, die als Kreuzungsventile ausgebildet sind. Alle vier Ventile besitzen eine Durchflußstellung 170 und eine Sperrstellung 172 in Form eines Rückschlagventils. Wenn die Bedienungsperson den Hebel 176 verstellt, dann verstellen sich die Sperrventile 162 und 164 aus ihrer in Fig. 2 gezeigten Durchflußstellung 170 in ihre Sperrstellung 172 und die Kreuzungsventile 166 und 168 aus ihrer Sperrstellung 172 in ihre Durchflußstellung 170.

Sind die Sperrventile 162 und 164 und die Kreuzungsventile 166 und 168 aus ihren in Fig. 2 gezeigten Stellungen entsprechend verstellt, dann sind nach einem Absenken des Geräterahmens 10 die Hubzylinder 50, 52 und 74 und 76 an den beiden Flügelrahmen in ihren eingefahrenen Stellungen blockiert. Im einzelnen riegelt das Sperrventil 162 die Zweigleitungen 144, 152 und 154 von der zweiten Leitung 126 des Hubventils 122 derart ab, daß aus diesen Zweigleitungen keine Flüssigkeit in die zweite Leitung 126 gelangen kann. Die hydraulischen Hubzylinder 50, 52 und 76 sind dadurch in einer Stellung blockiert, in der der Geräterahmen 10 abgesenkt ist. Das Sperrventil 164 sperrt den steuernden Zylinder 74 von dem gesteuerten Zylinder 66 ab, wenn die beiden Zylinder sich in ihrer den Geräterahmen abgesenkten Stellung befinden. Bei einem erneuten Anheben des Geräterahmens in seine Transportstellung können dann nur noch die Kolbenstangen der Hubzylinder 62, 64, 66 und 68 am Zentralrahmen 26 ausgefahren werden. Die Laufräder 46, 48 und 70, 72 an den Flügelrahmen 18 und 20 heben sich dabei von dem Boden ab und der gesamte Geräterahmen 10 wird nur noch von den Laufrädern 54, 56 und 58, 60 am Zentralrahmen 26 und von der Zugstange 14 getragen.

Die Kreuzungsventile 166 und 168 sind in einer Kreuzleitung 178 vorgesehen, die zwischen der Leitung 140 und 142 vorgesehen ist. Befinden sich die Kreuzungsventile 166 und 168 nach ihrer Verstellung aus ihrer in Fig. 2 gezeigten Position in ihrer Durchflußstellung 170, ermöglichen die Kreuzungsventile eine kurze Verbindung zwischen dem steuernden Zylinder 64 und dem gesteuerten Zylinder 66. Da das Kreuzungsventil 164 in seiner Sperrstellung 172 die Verbindung von dem steuernden Zylinder zu dem ursprünglich gesteuerten Zylinder 66 unterbrochen hat und da das Sperrventil 162 in seiner Sperrstellung 172 den gesteuerten Zylinder 52 blockiert, der ursprünglich von dem Zylinder 64 gesteuert wurde, ist nunmehr der Hubzylinder 64 an dem linken Abschnitt des Zentralrahmens 26 zu dem Hubzylinder 66 an dem rechten Abschnitt des Zentralrahmens 26 in Reihe geschaltet, so daß der steuernde Zylinder 64 nunmehr den Zylinder 66 steuert. Damit dienen die Ventile 162, 164, 166 und 168 zur Phasenumschaltung.

Bei dem erneuten Ausheben des Geräterahmens 10 werden dann nur noch die zylinderseitigen Enden der Hubzylinder 62, 64 und 68 mit der ersten Leitung 124 des Hubventils 122 in Verbindung stehen, wobei bei einer entsprechenden Druckflüssigkeitszufuhr die aus dem kolbenstangenseitigen Ende des Hubzylinders 64 verdrängte Flüssigkeit den Kolben des Hubzylinders 66 an seiner zylinderseitigen Seite beaufschlägt. Die kolbenstangenseitigen Enden der Hubzylinder 62, 66 und 68 sind in einem solchen Fall nach wie vor mit der zweiten Leitung 126 des Hubventils 122 und damit mit dem Sammelbehälter verbunden. Dadurch, daß der Zylinder 64 den Zylinder 66 steuert, erfolgt das Ausheben wieder in einem ausgeglichenen Zustand.

Eine Bedienungsperson, die den Geräterahmen 10 aus seiner in den Fig. 1 und 2 gezeigten Arbeitsstellung in seine eingeklappte Stellung oder Transportstellung verstellen will, hat die folgenden Schritte auszuführen. Zunächst verstellt die Bedienungsperson das Hubventil 122 in seine Stellung "Heben", so daß die erste Leitung 124 des Hubventils 122 mit der Druckquelle am ziehenden Fahrzeug verbunden ist und als Speiseleitung wirkt. Bei einer derartigen Stellung werden auch beide Spurmarkierer 78 und 80 in ihre ausgehobene Stellung verstellt. Nach dem Ausheben des Geräterahmens 10 hat die Bedienungsperson das Klappventil 100 in eine Stellung zu verbringen, in der dessen erste Leitung 102 mit den zylinderseitigen Enden der Klappzylinder 42 und 42 verbunden ist, so daß deren Kolbenstangen ausgefahren werden können. Zusätzlich gelangt bei diesem Schritt unter Druck stehende Flüssigkeit durch die Zweigleitung 106 in den Hydraulikkreis 108, um die Spurmarkierer 78 und 80 in ihrer hochgestellten Stellung zu halten, in der sie eingeklappt sind. Während des Einklappens der Flügelrahmen werden die Rastventile 118 und 120 über die Stange 174 in ihre Sperrstellung 172 verstellt, wodurch die Spurmarkierer hydraulisch blockiert werden. Nachdem der Geräterahmen vollständig nach vorne eingeklappt ist, wird der Geräterahmen wieder abgesenkt und die Bedienungsperson steigt von dem ziehenden Fahrzeug ab. Die Bedienungsperson verriegelt danach die beiden Flügelrahmen miteinander und verstellt den Hebel 176. Hierdurch werden die Sperrventile 162 und 164 in ihre Sperrstellung 172 verschoben und die Kreuzungsventile 166, 168 in ihre Durchflußstellung 170. Die Bedienungsperson steigt in das ziehende Fahrzeug wieder ein und stellt das Hubventil 122 auf seine Stellung "Heben". Die Hubzylinder 62, 64 und 68 an dem Zentralrahmen 26 sind dann mit der Druckquelle verbunden und der Hubzylinder 66 wird durch den Hubzylinder 64 verstellt. Nur die Laufräder 54, 56, 58 und 60 bleiben in Bodenberührung und der gesamte Geräterahmen wird von diesen Laufrädern und der Zugstange 14 getragen.

## Patentansprüche

1. Geräterahmen für landwirtschaftliche Maschinen mit einem Zentralrahmen (26), der wenigstens zwei Laufräder (54, 56, 58, 60) und wenigstens einen ersten und einen zweiten Hubzylinder (64 und 66) zur Vertikalverstellung aufweist, einem rechten und einem linken Flügelrahmen (18 und 20), von denen jeder wenigstens ein Laufrad (46, 48 bzw. 70, 72) und wenigstens einen Hubzylinder (52 bzw. 74) zur Vertikalverstellung aufweist, mit dem Zentralrahmen (26) zur Verstellung in eine Transportstellung schwenkbar verbunden ist, in der Arbeitsstellung zu dem Zentralrahmen (26) ausgerichtet ist und deren Laufräder (46, 48 bzw. 70, 72) in der Transportstellung keine Bodenberührung haben, und mit einem Hydraulikkreis für die Hubzylinder (52, 64, 66, 74) zur Vertikalverstellung, dadurch gekennzeichnet, daß der Hydraulikkreis mit einem Ventilsatz (160) zur Phasenumschaltung versehen und der erste oder zweite Hubzylinder (64 oder 66) des Zentralrahmens (26) als steuernder Zylinder und der zweite oder erste Hubzylinder (66 oder 64) des Zentralrahmens (26) als gesteuerter Zylinder ausgebildet ist, wobei in einer ersten Stellung des Ventilsatzes (160) der steuernde Zylinder den Hubzylinder (52 oder 74) des rechten oder linken Flügelrahmens (18 oder 20) steuert, während der gesteuerte Zylinder mit dem Hubzylinder (74 oder 52) des linken oder rechten Flügelrahmens (20 oder 18) verbunden ist, und wobei in einer zweiten Stellung des Ventilsatzes (160) die Hubzylinder (52, 74) der Flügelrahmen (18, 20) hydraulisch blockiert sind und der steuernde Zylinder mit dem gesteuerten Zylinder hydraulisch verbunden ist.

2. Geräterahmen nach Anspruch 1, dadurch gekennzeichnet, daß der Ventilsatz (160) zur Phasenumschaltung ein erstes und ein zweites Sperrventil (162, 164) aufweist, die jeweils zwischen einer Durchflußstellung (170) und einer Sperrstellung (172) verstellbar sind und in der zweiten Stellung des Ventilsatzes (160) ihre Sperrstellung (172) einnehmen, wobei der Rückfluß aus den Hubzylindern (52, 74) der Flügelrahmen (18, 20) blockiert ist.

3. Geräterahmen nach Anspruch 1, dadurch gekennzeichnet, daß der Ventilsatz (160) zur Phasenumschaltung mindestens ein Kreuzungsventil (166, 168) aufweist, das jeweils zwischen einer Durchflußstellung (170) und einer Sperrstellung (172) verstellbar ist, in der zweiten Stellung des Ventilsatzes seine Durchflußstellung (170) einnimmt und in dieser Stellung den steuernden Zylinder (64) des Zentralrahmens (26) mit dessen gesteuerten Zylinder (66) verbindet.

4. Geräterahmen nach Anspruch 2 und 3, dadurch gekennzeichnet, daß der Ventilsatz (160) zur Phasenumschaltung manuell schaltbar ist.

5. Geräterahmen nach einem oder mehreren der vorherigen Ansprüche, dadurch gekennzeichnet, daß der Ventilsatz (160) zur Phasenumschaltung auf dem Zentralrahmen (26) angeordnet ist.

6. Geräterahmen nach Anspruch 2 und 3, wobei die Hubzylinder doppelseitig beaufschlagbar sind, dadurch gekennzeichnet, daß das kolbenstangenseitige Ende des steuernden Zylinders (64) über eine Leitung (140) mit dem zylinderseitigen Ende des Hubzylinders (52 oder 74) des rechten oder linken Flügelrahmens (18 oder 20) verbunden ist, in dessen zu dem kolbenstangenseitigen Ende führender Speise- und Rücklaufleitung (154) eines der Sperrventile (162) vorgesehen ist, daß das zylinderseitige Ende des gesteuerten Zylinders (66) über eine Leitung (142) mit dem kolbenstangenseitigen Ende des Hubzylinders (74 oder 52) des linken oder rechten Flügelrahmens (20 oder 18) verbunden ist, wobei in dieser Leitung (142) das zweite Sperrventil (164) vorgesehen ist, und daß beide Verbindungsleitungen (140, 142) über eine Kreuzleitung (178) miteinander verbunden sind, in der mindestens ein Kreuzungsventil (166, 168) vorgesehen ist.

7. Geräterahmen nach einem oder mehreren der vorherigen Ansprüche, dadurch gekennzeichnet, daß jeder Flügelrahmen (18, 20) mit einem jeweils einem weiteren Laufrad zugeordneten Hilfszylinder (50, 76) und daß der Zentralrahmen (26) mit zwei weiteren jeweils einem weiteren Laufrad zugeordneten Hilfszylindern (62, 68) versehen ist, wobei in den Speise- und Rücklaufleitungen (144, 152), die zu den kolbenstangenseitigen Enden der Hilfszylinder (50, 76) an den Flügelrahmen (18, 20) führen, eines der beiden Sperrventile (162) vorgesehen ist.

8. Geräterahmen nach einem oder mehreren der vorherigen Ansprüche, dadurch gekennzeichnet, daß die Sperrventile (162, 170) in ihrer Sperrstellung (172) eine Druckbeaufschlagung der kolbenstangenseitigen Enden aller Hubzylinder und Hilfszylinder zulassen.

## Claims

1. An implement frame for agricultural machines with a central frame (26) which has at least two ground wheels (54, 56, 58, 60) and at least first and second lift cylinders (64, 66) for vertical positioning, right and left wing frames (18 and 20) of which each comprises at least one ground wheel (46, 48 or 70, 72) and at least one lift cylinder (52 to 74) for vertical positioning, being pivotally connected to the central frame (26) for putting into a transport position, being aligned with the central frame (26) in the working position, while its ground wheels (46, 48 or 70, 72) make no contact with the ground in the transport position, and with a hydraulic circuit for the lift cylinders (52, 54, 66, 74) for the vertical positioning, characterized in that the hydraulic circuit is provided with a valve set (160) for the phase changeover and the first or second lift cylinder (64 or 66) of the central frame (26) is formed as a controlling cylinder and the second or first lift cylinder (66 or 64) of the central frame (26) is formed as a controlled cylinder, wherein the controlling cylinder controls the lift cylinder (52 or 74) of the right or left wing frame (18 or 20) in a first position of the valve set (160), while the controlled cylinder is connected to the lift cylinder (74 or 52) of the left or right wing frame (20 or 18), and wherein the lift cylinders (52, 74) of the wing frames (18, 20) are blocked hydraulically in a second position of the valve set (160) and the controlling cylinder is hydraulically connected to the controlled cylinder.

2. An implement frame according to claim 1, characterized in that the valve set (160) for the phase changeover comprises first and second blocking valves (162, 164), which are each adjustable between a through-flow position (170) and a blocking position (172) and assume their blocking position (172) in the second position of the valve set (160), wherein the return flow from the lift cylinders (52, 74) of the wing frames (18, 20) is blocked.

3. An implement frame according to claim 1, characterized in that the valve set (160) for the phase changeover comprises at least one cross-over valve (166, 168), each of which can be adjusted between a through-flow position (170) and a blocked position (172), assumes its through-flow position (170) in the second position of the valve set and connects the controlling cylinder (64) of the central frame (26) to its controlled cylinder (66) in this position.

4. An implement frame according to claim 2 or 3, characterized in that the valve set (160) for the phase changeover can be switched manually.

5. An implement frame according to one or more of the preceding claims, characterized in that the valve set (160) for the phase changeover is arranged on the central frame (26).

6. An implement frame according to claim 2 or 3, wherein the lift cylinders are double acting, characterized in that the piston rod end of the controlling cylinder (64) is connected via a line (140) to the cylinder end of the lift cylinder (52 or 74) of the right or left wing frame (18 or 20), in whose supply and return line (154) leading to the piston rod end one of the blocking valves (162) is disposed, in that the cylinder end of the controlled cylinder (66) is connected via a line (142) to the piston rod end of the lift cylinder (74 or 52) of the left or right wing frame (20 or 18), while the second blocking valve (164) is provided in this line (142), and in that both connecting lines (140, 142) are connected together via a crossover line (178) in which at least one crossover valve (166, 168) is provided.

7. An implement fame according to one or more of the preceding claims, characterized in that each wing fame (18, 20) is provided with a respective auxiliary cylinder (50, 76) associated with a further ground wheel and in that the central frame (26) is provided with two further auxiliary cylinders (62, 68) each associated with a respective further ground wheel, wherein one of the two blocking valves (162) is provided in the feed and return lines (144, 152) which lead to the piston rod ends of the auxiliary cylinders (50, 76) on the wing frames (18, 20).

8. An implement frame according to one or more of the preceding claims, characterized in that the blocking valves (162, 170) allow pressurisation of all lift cylinders and auxiliary cylinders at their piston rod ends in their blocking position (172).

## Revendications

1. Châssis pour machines agricoles comportant un châssis central (26), qui comporte au moins deux roues (54, 56, 58, 60) et au moins un premier et un second vérins de levage (64 et 66) pour effectuer le réglage vertical, un châssis d'aile droit et un châssis d'aile gauche (18 et 20), dont chacun comporte au moins une roue (46, 48 ou 70, 72) et au moins un vérin de levage (52 ou 54) pour le réglage vertical, est relié de manière à pouvoir pivoter au châssis central (26) pour le réglage en une position de transport et est aligné dans la position de travail par rapport au châssis central (26), et dont les roues (46, 48 ou 70, 72) ne sont pas en contact avec le sol, dans la position de transport et comportant un circuit hydraulique pour les vérins de levage (52, 64, 66, 68) pour le réglage vertical, caractérisé en ce que le circuit hydraulique comporte un ensemble de soupapes (160) pour réaliser une commutation de phase et que le premier ou le second vérin de levage (64 ou 66) du châssis central (26) est agencé sous la forme d'un vérin de commande et le second ou le premier vérin de levage (66 ou 64) du châssis central (26) est agencé sous la forme d'un vérin commandé, auquel cas, lorsque l'ensemble de soupapes (160) est dans une première position, le vérin de commande commande le vérin de levage (52 ou 74) du châssis d'aile gauche ou droit (18 ou 20) alors que le vérin de commande est relié au vérin de levage (74 ou 52) du châssis d'aile gauche ou droit (20 ou 18), et, lorsque l'ensemble de soupapes (160) est dans une seconde position, les vérins de levage (52, 74) des châssis d'aile (18, 20) sont bloqués hydrauliquement et le vérin de commande est relié hydrauliquement au vérin commandé.

2. Châssis selon la revendication 1, caractérisé en ce que l'ensemble de soupapes (160) pour la commutation de phase comporte des première et seconde soupapes de blocage (162, 164), qui sont déplaçables respectivement entre une position passante (170) et une position de blocage (172) et qui, lorsque l'ensemble de soupapes (160) est dans la seconde position, prennent leur position de blocage (172), auquel cas le reflux à partir du vérin de levage (52, 74) des châssis d'aile (18, 20) est bloqué.

3. Châssis selon la revendication 1, caractérisé en ce que l'ensemble de soupapes (160) pour la commutation de phase comporte au moins une soupape à croisement (166, 168), qui peut être déplacée respectivement entre une position passante (170) et une position de blocage (172), et prend sa position passante (170) lorsque l'ensemble de soupapes est dans sa seconde position et relie, dans cette position, le vérin de commande (64) du châssis central (26) au vérin commandé (66) de ce châssis.

4. Châssis selon les revendications 2 et 3, caractérisé en ce que l'ensemble de soupapes (160) pour la commutation de phase peut être commuté manuellement.

5. Châssis selon une ou plusieurs des revendications précédentes, caractérisé en ce que l'ensemble de soupapes (160) pour la commutation de phase est disposé sur le châssis central (26).

6. Châssis selon les revendications 2 et 3, dans lequel les vérins de levage peuvent être chargés sur leurs deux faces, caractérisé en ce que l'extrémité, située du côté de la tige de piston, du vérin de commande (64) est raccordée par l'intermédiaire d'une canalisation (140) à l'extrémité située du côté du cylindre, du vérin de levage (52 ou 74) du châssis d'aile gauche ou droit (18 ou 20), que l'une des soupapes de blocage (162) est prévue dans la canalisation d'alimentation et de retour (154) de ce châssis, qui aboutit à l'extrémité située du côté de la tige de piston, que l'extrémité, située du côté du vérin, du cylindre commandé (66) est reliée par l'intermédiaire d'une canalisation (142) à l'extrémité, située du côté de la tige de piston, du vérin de levage (74 ou 52) du châssis d'aile gauche ou droit (20 ou 18), la seconde soupape de blocage (164) étant prévue dans cette canalisation (142), et que les deux canalisations de liaison (140, 142) sont reliées entre elles par l'intermédiaire d'une canalisation croisée (178), dans laquelle est prévue au moins une soupape de croisement (166, 168).

7. Châssis selon une ou plusieurs des revendications précédentes, caractérisé en ce que chaque châssis d'aile (18, 20) est équipé d'un vérin auxiliaire (50, 76) associé respectivement à une autre roue et que le châssis central (26) est pourvu de deux autres vérins auxiliaires (62, 68) associés respectivement à une autre roue, auquel cas l'une des deux soupapes de blocage (162) est prévue dans les canalisations d'alimentation et de retour (144, 152), qui aboutissent aux extrémités, situées de la tige de piston, des vérins auxiliaires (50, 76) sur les châssis d'aile (18, 20).

8. Châssis selon une ou plusieurs des revendications précédentes, caractérisé en ce que dans leur position de blocage (172), les soupapes de blocage (162, 170) permettent une charge en pression des extrémités, situées du côté de la tige de piston, de tous les vérins de levage et de tous les vérins auxiliaires.
